(19) Europäisches Patentamt
European Patent Office
Office européen des brevets

(11) Publication number: **0 046 829**
**A1**

# (12) EUROPEAN PATENT APPLICATION

(21) Application number: 80304451.0

(22) Date of filing: 10.12.80

(51) Int. Cl.³: C 10 J 3/54
C 10 G 1/08

(30) Priority: 02.09.80 GB 8028300

(43) Date of publication of application:
10.03.82 Bulletin 82/10

(84) Designated Contracting States:
BE DE FR NL

(71) Applicant: Exxon Research and Engineering Company
P.O.Box 390 200 Park Avenue
Florham Park New Jersey 07932(US)

(72) Inventor: Stell, Richard Charles
16227 Cavendish Drive
Houston Texas(US)

(72) Inventor: Nahas, Nicholas Charles
49 Thornley Drive
Chatham New Jersey(US)

(74) Representative: Field, Roger Norton et al,
5 Hanover Square
London W1R OHQ(GB)

## (54) Recovery of alkali metal constituents from coal conversion residues.

(57) A coal gasification operation (32) or similar conversion process is carried out in the presence of an alkali metal-containing catalyst producing char particles containing alkali metal residues. Alkali metal constituents are recovered from the particles by burning the particles (45, 55) to increase their size and density and then leaching the particles of increased size and density with water, to extract the water-soluble alkali metal constituents.

./...

EP 0 046 829 A1

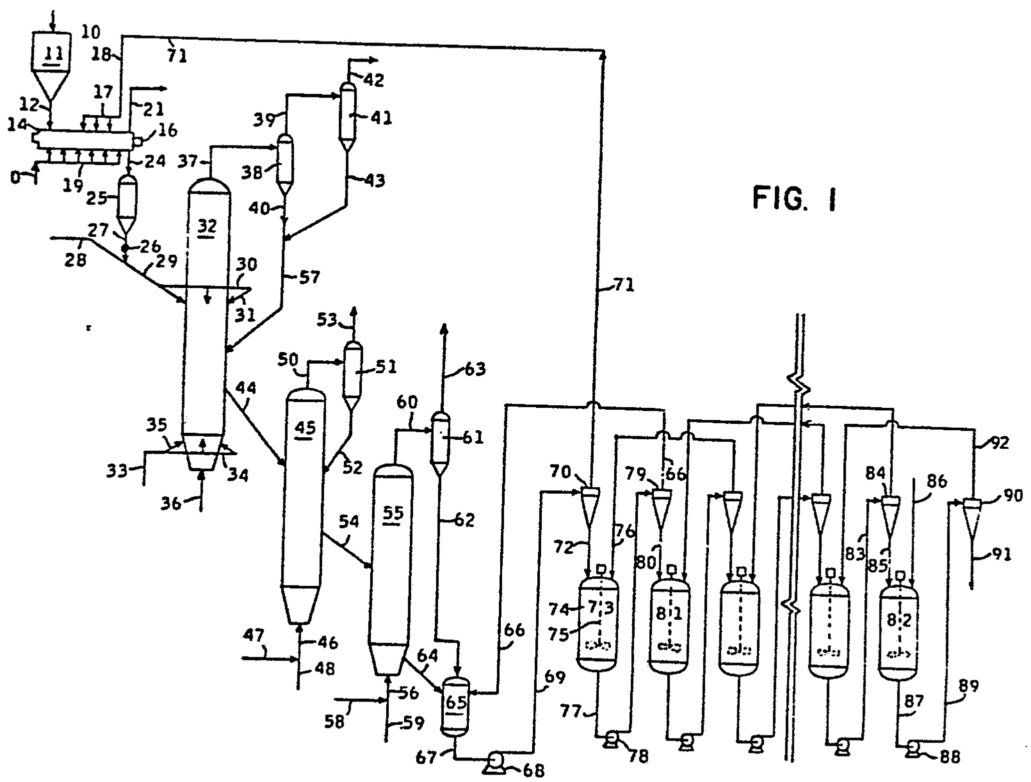
10
11
12
14
16
17
18
19
21
24
25
26
27
28
29
30
31
32
33
34
35
36
37
38
39
40
41
42
43
44
45
46
47
48
50
51
52
53
54
55
56
57
58
59
60
61
62
63
64
65
66
67
68
69
70
71
72
73
74
75
76
77
78
79
80
81
82
83
84
85
86
87
88
89
90
91
92

FIG. 1

This invention relates to the conversion of coal and similar carbonaceous solids in the presence of an alkali metal-containing catalyst and is particularly concerned with the recovery of alkali metal constituents from spent solids produced during coal gasification and similar operations and their re-use as constituents of the alkali metal-containing catalyst.

It has long been recognized that certain alkali metal compounds can be employed to catalyse the gasification of carbonaceous materials such as coal and other carbonaceous solids. Studies have shown that potassium carbonate, sodium carbonate, cesium carbonate, and lithium carbonate will substantially accelerate the rate at which steam, hydrogen, carbon dioxide, oxygen and the like react with bituminous coal, subbituminous coal, lignite, petroleum coke, organic waste materials and similar carbonaceous solids to form methane, carbon monoxide, hydrogen, carbon dioxide and other gaseous products. It has been found that of the alkali metal carbonates, cesium carbonate is the most effective gasification catalyst, followed by potassium carbonate, sodium carbonate, and lithium carbonate in that order. Because of the relatively high cost of cesium carbonate and the low effectiveness of lithium carbonate, most of the experimental work in this area which has been carried out in the past has been directed toward the use of potassium and sodium carbonate. The catalytic activity of sodium carbonate, however, is substantially lower than that of potassium carbonate, therefore attention has been focused in the past on the use of potassium carbonate as a gasification catalyst.

Coal gasification processes and similar operations carried out in the presence of alkali metal compounds at high temperatures generally result in the formation of chars and alkali metal residues. Coal and other carbonaceous solids used in such operations normally contain

mineral constituents that are converted to ash during the gasification process. Although the composition of ash varies, the principal constituents, expressed as oxides, are generally silica, alumina and ferric oxide. The alumina is usually present in the ash in the form of aluminosilicates. Studies indicate that at least a portion of the alkali metal compounds that are used as gasification catalyst constituents react with the aluminosilicates and other ash constituents to form alkali metal residues containing water-soluble alkali metal compounds such as carbonates, sulfates and the like, and water-insoluble, catalytically inactive materials such as alkali metal aluminosilicates. Thus, the chars produced during coal gasification and similar conversion processes will contain in addition to carbonaceous material and ash, alkali metal residues comprising both water-soluble alkali metal constituents and water-insoluble alkali metal constituents. It is generally advisable to withdraw a portion of the char from the reaction zone during gasification and similar operations in order to eliminate the ash and alkali metal residues and prevent their building up within the reaction zone or other vessels in the system.

In gasification and other processes referred to above that utilize alkali metal-containing catalysts, the cost of the alkali metal constituents is a significant factor in determining the overall cost of the process. In order to maintain catalyst costs at a reasonable level, it is reused. One common method of recovering the alkali metal constituents is to wash the char particles removed from the reaction zone with water in order to leach out the water-soluble alkali metal constituents. It has also been suggested to wash the char particles at ambient conditions with a saturated calcium hydroxide solution so that calcium ions can displace alkali metal ions held at ion exhange sites in the char particles and thereby increase the amount of alkali metal constituents that can

be recovered by water washing alone. Since the alkali metal is present in the form of both water-soluble and water-insoluble compounds, not all of the alkali metal constituents can be recovered by washing with water or an aqueous solution of calcium hydroxide and substantial quantities of make-up alkali metal compounds are therefore required and add appreciably to the cost of the conversion process.

It has been proposed to recover the alkali metal constituents tied up as water-insoluble alkali metal compounds from the char particles along with the water-soluble alkali metal constituents by treating the char particles with calcium hydroxide in the presence of water at temperatures between about 121°C and 371°C. The calcium ions from the calcium hydroxide evidently react with alkali metal aluminosilicates and other water-insoluble alkali metal compounds in the char particles to produce alkali metal constituents which dissolve in the water to form an aqueous solution. The resultant solution is recycled to the reaction zone where the alkali metal constituents are reused as at least a portion of the alkali metal-containing catalyst. It has also been suggested that the water-insoluble alkali metal constituents could be converted into water-soluble alkali metal constituents by mixing the char particles with calcium oxide and heating the dry mixture to a temperature above 871°C in a rotary kiln, crushing the resultant solid mass and contacting it with water to leach out the water-soluble alkali metal constituents formed in the rotary kiln for reuse as a portion of the catalyst.

The present invention provides an improved process for the recovery of alkali metal constituents from char particles produced during coal gasification and other conversion processes carried out in the presence of an alkali metal-containing catalyst, preferably a potassium-containing catalyst. In accordance with the invention it

has now been found that alkali metal constituents can be effectively recovered from char particles containing alkali metal residues produced during coal gasification and related high temperature conversion processes by burning the char particles in a combustion zone, preferably a fluidized bed combustion zone, to produce particles of increased size and density and then leaching these particles with water or an aqueous solution, normally in a countercurrent multistage leaching system, to remove water-soluble alkali metal constituents from the particles. The aqueous solution enriched in alkali metal constituents formed in the leaching step is then separated from the particles of increased size and density and the recovered alkali metal constituents are used in the conversion process as at least a portion of the alkali metal constituents which comprise the alkali metal-containing catalyst. Preferably, such use is achieved by recycling the solution to the conversion process. If desired, however, the alkali metal constituents may first be recovered from the aqueous solution and then used in the conversion process. In some instances, it may be desirable to burn the char particles in the presence of an added calcium or magnesium-containing compound in the combustion zone in order to facilitate the conversion of water-insoluble alkali metal constituents into water-soluble alkali metal constituents prior to leaching the particles with water. Alternatively, this conversion may be accomplished by treating the particles of increased size and density produced in the combustion zone with a calcium or magnesium-containing compound in the presence of water at a temperature between about 121°C and about 371°C and then water leaching the particles after the treatment step.

The invention is based in part upon laboratory studies which indicate that the separation of char particles produced during catalytic coal gasification from an aqueous solution during leaching operations is difficult to effect because of the size and density of the char particles. For example, in a multistage leaching system in which char particles were slurried with water or an aqueous solution partially enriched with alkali metal constituents it was determined that separations of the resultant slurries into their components via hydroclones, centrifuges, gravity settlers and similar liquid-solids separation devices resulted in solids-lean streams having a relatively high concentration of solids and solids-rich streams having a relatively high concentration of liquid. Similarly, the use of filters was a problem because the finer char particles tended to plug the interstices of the filter cake thereby decreasing the efficiency of filtration and drastically increasing the required time of filtration.

Laboratory studies indicate that when the char particles resulting from catalytic coal gasification are burned in a fluidized bed combustion zone, the size and density of the resultant particles are increased significantly and this in turn results in a significant increase in the efficiency of the liquid-solids separations carried out during leaching. In addition, these laboratory studies indicate that combustion at high temperatures may result in alkali metal catalyst constituents being lost from the char, evidently because the alkali metal constituents are volatilized at high temperatures. If this is the case, it may be necessary to carry out the combustion at a relatively low temperature in order to prevent a substantial loss of alkali metal constituents during the burning step and allow for the maximum recovery

of alkali metal constituents in subsequent leaching operations. In general, studies tend to indicate that the combustion temperature should normally be below about 843°C. Laboratory studies also indicate that the amount of alkali metal constituents retained with the char during combustion may be maintained at a relatively high level even at temperatures above 843°C if the combustion is carried out at an initial low temperature and then completed at a higher temperature. Normally, the initial combustion temperature will be above about 430°C and the final combustion temperature will be below about 960°C. Preferably, the initial combustion temperature will be between about 515°C and about 677°C, and the final combustion temperature will be between about 780°C and 843°C.

The process of the invention, unlike similar processes proposed in the past, results in a substantial recovery of alkali metal constituents and at the same time facilitates the liquid-solids separations which must be carried out during leaching to recover the alkali metal constituents from the particles produced during catalytic coal gasification and similar catalytic conversion processes. This in turn results in a less complex design of the catalyst recovery system. As a result the invention makes possible substantial savings in gasification and other conversion operations carried out in the presence of alkali metal-containing catalysts and permits the generation of product gases and/or liquids at a significantly lower cost than would otherwise be the case.

The invention is described with reference to the drawings in which

Figure 1 is a schematic flow diagram of a catalytic coal gasification process in which alkali metal constituents of the catalyst are recovered and reused in the process; and

Figure 2 is a plot illustrating that the fluid bed combustion of char produced by the fluid bed gasification of a coal impregnated with potassium carbonate increases the size of the particles comprising the char.

The process depicted in Figure 1 is one for the production of methane by the gasification of a bituminous coal, subbituminous coal, lignite or similar carbonaceous solids with steam at high temperature in the presence of a carbon-alkali metal catalyst prepared by impregnating the feed solids with a solution of an alkali metal compound or a mixture of such compounds, preferably potassium carbonate, potassium hydroxide or a mixture thereof, and thereafter heating the impregnated material to a temperature sufficient to produce an interaction between the alkali metal and the carbon present. It will be understood that the alkali metal recovery system disclosed is not restricted to this particular gasification process and that it can be employed in conjunction with any of a variety of other conversion processes in which alkali metal compounds or carbon-alkali metal catalysts are used to promote the reaction of steam, hydrogen, oxygen, or the like with carbonaceous feed materials to produce a char, coke or similar solid product containing alkali metal residues from which alkali metal compounds are recovered for reuse as the catalyst or a constituent of the catalyst. It can be employed, for example, for the recovery of alkali metal compounds from various processes for the gasification of coal, petroleum coke, lignite, organic waste materials and similar solids feed streams which produce spent carbonaceous solids. Other conversion processes with which it may be used include operations for the carbonization of coal and similar feed solids, for the liquefaction of coal and related carbonaceous materials, for the retorting of oil shale, for the partial combustion of carbonaceous feed materials and the like. Such processes have been disclosed in the literature and will be familiar to those skilled in the art.

In the process depicted in Figure 1, a solid carbonaceous feed material such as bituminous coal, subbituminous coal, lignite, or the like that has been crushed to a particle size of about 8 mesh or smaller on the U. S. Sieve Series Scale is passed into line 10 from a feed preparation plant or storage facility that is not shown in the drawing. The solids introduced into line 10 are fed into a hopper or similar vessel 11 from which they are passed through line 12 into feed preparation zone 14. This zone contains a screw conveyor or similar device, not shown in the drawing, that is powered by motor 16, a series of spray nozzles or similar devices 17 for the spraying of alkali metal-containing solution supplied through line 18 onto the solids as they are moved through the preparation zone by the conveyor, and a similar set of nozzles or the like 19 for the introduction of steam into the preparation zone. The steam, supplied through line 20, serves to heat the impregnated solids and drive off the moisture. The steam is withdrawn from the feed preparation zone through line 21 and passed to a condenser, not shown, from which it may be recovered for use as makeup water or the like. The alkali metal-containing solution is recycled through line 71 from the alkali metal recovery section of the process, which is described in detail hereinafter.

It is preferred that sufficient alkali metal-containing solution be introduced into feed preparation zone 14 to provide from about 1 to about 50 weight percent of the alkali metal compound or mixture of such compounds on the coal or the other carbonaceous solids. From about 5 to about 20 weight percent is generally adequate. The dried impregnated solid particles prepared in zone 14 are withdrawn through line 24 and passed to a closed hopper or a similar vessel 25. From here they are discharged through a star wheel feeder or equivalent device 26 in line 27 at an elevated pressure sufficient to permit their entrainment into a stream of high pressure steam,

recycle product gas, inert gas, or other carrier gas introduced into line 29 via line 28. The carrier gas and entrained solids are passed through line 29 into manifold 30 and fed from the manifold through feed lines 31 and nozzles, not shown in the drawing, into the gasifier 32. In lieu of or in addition to hopper 25 and star wheel feeder 26 the feed system may employ parallel lock hoppers, pressurized hoppers, aerated standpipes operated in series, or other apparatus to raise the input feed solids stream to the required pressure level.

Gasifier 32 comprises a refractory lined vessel containing a fluidized bed of carbonaceous solids extending upward within the vessel above an internal grid or similar distribution device not shown in the drawing. The bed is maintained in the fluidized state by means of steam introduced through line 33, manifold 34 and peripherally spaced injection lines and nozzles 35 and by means of recycle hydrogen and carbon monoxide introduced through bottom inlet line 36. The particular injection system shown in the drawing is not critical, hence other methods for injecting the steam and recycle hydrogen and carbon monoxide may be employed. In some instances, for example, it may be preferred to introduce both the steam and recycle gases through multiple nozzles to obtain more uniform distribution of the injected fluid and reduce the possibility of channeling and related problems.

The injected steam reacts with carbon in the feed material in the fluidized bed in gasifier 32 at a temperature within the range between about 425°C and about 870°C, preferably between about 600°C and about 760°C, and at a pressure between about 7.0 and about 140 $kg/cm^2$, preferably between about 14 and about 35 $kg/cm^2$. Due to the equilibrium conditions existing in the bed as the result of the presence of the carbon-alkali metal catalyst and the recycle hydrogen and carbon monoxide injected near the lower end of the bed, the net reaction products will normally consist essentially of methane and carbon dioxide.

The ratio of methane to carbon dioxide in the raw product gas thus formed will preferably range from about 1.0 to about 1.4 moles per mole, depending upon the amount of hydrogen and oxygen in the feed coal or other carbonaceous solids. The coal employed may be considered as an oxygenated hydrocarbon for purposes of describing the reaction. Wyodak coal, for example, may be considered as having the approximate formula $CH_{0.84}O_{0.20}$, based on the ultimate analysis of moisture and ash-free coal and neglecting nitrogen and sulfur. The reaction of this coal with steam to produce methane and carbon dioxide is as follows:

$$1.24\ H_2O(g) + 1.8\ CH_{0.84}O_{0.20} \rightarrow 0.8\ CO_2 + CH_4$$

Under the same gasification conditions, coals of higher oxygen content will normally produce lower methane to carbon dioxide ratios and those of lower oxygen content will yield higher methane to carbon dioxide ratios.

The gas leaving the fluidized bed in gasifier 32 passes through the upper section of the gasifier, which serves as a disengagement zone where particles too heavy to be entrained by the gas leaving the vessel are returned to the bed. If desired, this disengagement zone may include one or more cyclone separators or the like for removing relatively large particles from the gas. The gas withdrawn from the upper part of the gasifier through lines 37 will normally contain methane, carbon dioxide, hydrogen, carbon monoxide, unreacted steam, hydrogen sulfide, ammonia, and other contaminants formed from the sulfur and nitrogen contained in the feed material, and entrained fines. This gas is introduced into cyclone separator or similar device 38 for removal of the larger fines. The overhead gas then passes through line 39 into a second separator 41 where smaller particles are removed. The gas from which the solids have been separated is taken overhead from separator 41 through line 42 and the fines

are discharged downward through dip legs 40 and 43. These fines are normally returned to the gasifer via line 57.

After entrained solids have been separated from the raw product gas as described above, the gas stream may be passed through suitable heat exchange equipment for the recovery of heat and then processed for the removal of acid gases. Once this has been accomplished, the remaining gas, consisting primarily of methane, hydrogen and carbon monoxide, may be cryogenically separated into a product methane stream and a recycle stream of hydrogen and carbon monoxide which is returned to the gasifier through line 36. Conventional gas processing equipment can be used. Since a detailed description of this downstream gas processing portion of the process is not necessary for an understanding of the invention, it has been omitted.

The fluidized bed in gasifier 32 is comprised of char particles formed as the solid carbonaceous feed material undergoes gasification. The composition of the char particles will depend upon the amount of mineral matter present in the carbonaceous material fed to the gasifier, the amount of the alkali metal compound or mixture of such compounds impregnated into the feed material, and the degree of gasification that the char particles undergo while in the fluidized bed. The lighter char particles, which will have a relatively high content of carbonaceous material, will tend to remain in the upper portion of the fluidized bed. The heavier char particles, which will contain a relatively small amount of carbonaceous material and a relatively large amount of ash and alkali metal residues, will tend to migrate toward the bottom of the fluidized bed. A portion of the heavier char particles is normally withdrawn from the bottom portion of the fluidized bed in order to eliminate ash and thereby prevent it from building up within the gasifier and other vessels in the system.

During that gasification process taking place in reactor 32, alkali metal residues containing water-soluble

alkali metal compounds such as carbonates, sulfides and the like, and water-insoluble compounds such as alkali metal aluminosilicates, alkali metal iron sulfides and similar compounds are formed. The water-insoluble compounds are produced by the reaction of the alkali metal constituents with the mineral constituents of the coal and other carbonaceous solids. It has been found that from about 10 to about 50 percent by weight of the potassium carbonate or other alkali metal compound employed to impregnate the coal prior to gasification will react with the mineral matter to form water-insoluble compounds. To improve the economics of the catalytic gasification described above and other catalytic conversion processes where alkali metal residues are formed and withdrawn with char and ash from the gasifier or the reaction zone, it has been proposed to leach the char particles with water in a multistage countercurrent leaching system to recover the water-soluble constituents. In order to recover the alkali metal constituents tied up in the water-insoluble portion of the alkali metal residues, it has been suggested that the char particles containing the alkali metal residues first be treated with a calcium-containing compound in the presence of liquid water at a temperature between 121°C and 371°C and then subjected to the multistage countercurrent water wash. Such a treating procedure prior to water leaching converts the water-insoluble alkali metal constituents in the char particles to water-soluble alkali metal constituents which are then recovered in the water leaching system with the other water-soluble constituents.

It has now been found that the char particles containing alkali metal residues produced during gasification are of such low density and small size that they are not easily separated from the aqueous leaching liquid present in the various stages of the multistage countercurrent extraction systems referred to above. Laboratory studies indicate that the separation of the char particles

 

from the aqueous leaching liquid are difficult to achieve with a high degree of efficiency in a short period of time and therefore more stages and larger equipment are required to effect such separations. This in turn results in an expensive extraction system which is costly to operate. It has been found that the size and density of the char particles containing the alkali metal residues can be increased sufficiently to greatly enhance the ease with which the liquid-solids separations can be made in the stages of such extraction systems by burning the char particles in a combustion zone prior to subjecting the particles to multistage countercurrent aqueous leaching.

Referring again to Figure 1, char particles containing carbonaceous material, ash, and alkali metal residues are continously withdrawn from the fluidized bed in gasifier 32 through transfer line 44, passed through a slide valve, not shown in the drawing, and injected into a fluidized bed of carbon-containing solids extending upward within combustor 45 above an internal grid or similar distribution device not shown in the drawing. The carbon-containing solids are maintained in a fluidized state within the combustor by means of air and recycle flue gas introduced into the combustor through bottom inlet line 46. The oxygen in the mixture of gases injected into the bottom of the combustor reacts with carbon in the char particles fed to the combustor to form carbon dioxide and carbon monoxide and thereby produces a substantial amount of heat, a portion of which is absorbed by the rising gases. The concentration of oxygen in the mixture of gases passed into the bottom of the combustor is normally controlled so that the temperature in the combustor is maintained at a relatively low value, between about 430°C and about 690°C, preferably between about 515°C and about 677°C. The concentration of oxygen in the mixture of gases will normally range between about 2 and about 5 volume percent and is controlled by the amount of recycle flue gas in line 47 that is mixed with the air

supplied to the combustor through line 48. The combustion taking place within the combustor is controlled so that all of the carbon in the char is not burned away. A portion of the carbon is allowed to remain so that the particles produced in the combustor can be further burned in a second combustor.

The gas leaving the fluidized bed in combustor 45 passes through the upper section of the combustor, which serves as a disengagement zone where particles too heavy to be entrained by the gas leaving the vessel are returned to the bed. If desired this disengagement zone may include one or more cyclone separators or the like for the removal of relatively large particles from the gas. The gas withdrawn from the upper part of the combustor through line 50 will normally contain a mixture of carbon monoxide, carbon dioxide, hydrogen, nitrogen, sulfur dioxide formed from the sulfur contained in the char fed to the combustor and entrained fines. This hot flue gas is introduced into cyclone separator or similar device 51 where the fine particulates are removed and returned to combustor 45 via dip leg 52. The raw, hot flue gas from which the fines have been removed is withdrawn overhead from separator 51 through line 53 and can be passed to a waste heat boiler or other device where its heat can be utilized to generate steam or for some other purpose. A portion of the cooled flue gas is normally recycled to the combustor through line 47 to dilute the combustion air and provide a means of absorbing at least a portion of the heat produced as the char particles burn in the fluidized bed.

The burning of the char particles which takes place in combustor 45 is conducted at a relatively low temperature to ensure that all of the carbon is not completely consumed. It has been found that an initial combustion at such a low temperature will tend to fix the alkali metal constituents into the char so that combustion at higher temperatures will not result in the loss of

potassium from the char particles. It is desirable to complete the combustion at a higher temperature in order to recover additional energy by burning the remaining carbon in the particles and to further increase the size and density of the resultant particles thereby increasing the efficiency of the liquid-solids separations carried out in the catalyst recovery portion of the process.

Referring again to Figure 1, the partially burned particles of increased size and density produced in combustor 45 are withdrawn from the fluidized bed through transfer line 54, passed through a slide valve, not shown in the drawing, and injected into a fluidized bed of solids extending upward within second combustor 55 above an internal grid or similar distribution device not shown in the drawing. The solids, like those in combustor 45, are maintained in the fluidized state within the combustor by means of a mixture of air and flue gas introduced into the combustor through bottom inlet line 56. The fluidizing gases are formed by mixing recycle flue gas in line 58 with air supplied through line 59. Normally, sufficient flue gas is mixed with the air so that the fluidizing gases entering the bottom of the combustor contain between about 10 and about 20 percent oxygen by volume. The amount of oxygen in the fluidizing gases is controlled so that the temperature in the combustor is between about 705°C and about 960°C, preferably between about 780°C and about 843°C.

In the fluidized bed in combustor 55, the carbon remaining in the particles fed to the combustor reacts with the oxygen in the fluidizing gases to produce carbon monoxide, carbon dioxide, and large quantities of heat. The fluidizing gases absorb a portion of the liberated heat as they pass upward through the combustor. The top of the combustor serves as a disengagement zone where particles too heavy to be entrained by the gas leaving the vessel are returned to the bed. The gas which leaves the top of the combustor through line 60 will normally contain carbon monoxide, carbon dioxide, hydrogen, nitrogen, sulfur dioxide and fine particles of solids. This hot flue gas is passed into cyclone separator or similar device 61 where the fine particulates are removed through line 62 and passed to the catalyst recovery portion of the process as described hereinafter. The hot flue gas which is withdrawn from separator 61 through line 63 is normally passed to a waste heat boiler or similar device where the heat in the gas is recovered in the form of steam which can be utilized in the process where needed. Normally, a portion of the cooled flue gas is recycled to combustor 55 through line 58 to dilute the air and thereby control the combustion temperature.

The particles of increased size and density produced in combustor 55 will contain little, if any, carbon but will contain substantially all of the alkali metal constituents originally impregnated onto the coal or similar carbonaceous solids fed to gasifier 32. These constituents, which are present in the form of alkali metal residues, are ready for treatment to recover the alkali metal constituents. The particles are removed from the fluidized bed in combustor 55 through line 64, cooled, and then passed into slurry tank 65. Here the particles are combined with the fines in dipleg 62, which are recovered from the flue gas leaving combustor 55, and the resulting mixture is slurried with an aqueous solution containing water-soluble alkali metal constituents injected into the slurry tank through line 66. The solution injected into tank 65 will normally consist of an aqueous solution containing alkali metal constituents produced by washing the solids in tank 65 in a countercurrent multistage extraction system as described in detail hereinafter. During the slurrying process which takes place in the tank, a portion of the water-soluble constituents present in the alkali metal residues passed into the slurry tank with the particles from combustor 55 will dissolve in the water thereby further enriching the solution in alkali

metal constituents. Although the particles leaving combustor 55 are larger in size and in density than the particles removed from gasifier 32, they are not too large and therefore can be passed directly into slurry tank 65 without first being subjected to a crushing or grinding step.

The slurry formed in tank 65 is withdrawn through line 67 and passed by means of pump 68 through line 69 to hydroclone, centrifuge, filter or similar liquid-solids separation device 70 where a large portion of the particles is removed from the liquid. Since the size and density of the particles was substantially increased in combustors 45 and 55, the separation of the particles from the liquid is more efficient thus enabling the use of a smaller separation device and producing a liquid stream which is less concentrated in solids.

The liquid stream produced in separation device 70 will be richer in alkali metal constituents than the liquid fed to slurry tank 65 through line 66 and is normally recycled through lines 71, 18, and 17 to feed preparation zone 14. Here, the coal or similar carbonaceous feed material is impregnated with the alkali metal constituents in the aqueous solution. If the concentration of the alkali metal constituents in the recycle stream is undesirably low, the solution may be concentrated by removing excess water before it is returned to the feed preparation zone.

The particles removed from separation device 70 will contain water-soluble alkali metal constituents that did not pass into solution during slurrying in tank 65 and entrained liquid containing water-soluble constituents. Depending upon the type of coal or similar carbonaceous solids fed to gasifier 32 and other factors, the particles may also contain water-insoluble alkali metal residues. The water-soluble alkali metal constituents remaining in the particles are recovered by passing the solids through a multistage countercurrent aqueous extraction unit which

includes a plurality of tanks or vats, classifiers, screw-fed contactors, thickeners, continuous centrifuges or the like. The number of actual stages employed in the extraction system will depend to a large extent upon the composition of the solids fed to the system and the particular contacting conditions utilized. Each stage in the particular system shown in the drawing includes a closed vat or tank containing a stirrer, means for countercurrent circulation of liquids and solids from one tank to another, and a hydroclone, filter, centrifuge or similar liquid-solids separation device. Although the drawing shows that each stage is comprised of a tank and a separate liquid-solids separation device, it will be understood that these two functions can be combined into one device which would then serve as a stage itself. An example of such a device is a gravity settler in which the contacting of the particles with liquid and their subsequent separation from the liquid occur simultaneously.

The solids removed from the slurry fed to separation device 70 are passed through line 72 into final stage 73 of the multistage liquid-solids extraction train. This stage comprises a mixing tank 74 which contains a stirrer 75. In the mixing tank the solids are slurried with an aqueous solution containing a high concentration of alkali metal constituents introduced into the tank through line 76 and the resultant slurry is agitated by the stirrer. The temperature in the tank is normally maintained at a value near the boiling point of the aqueous medium. Water-soluble alkali metal constituents present in the solid particles are in part extracted by the liquid in contact with the particles.

The slurry which is formed in stage 73 is withdrawn from the bottom of tank 74 through line 77 and circulated by means of pump 78 to liquid-solids separation device 79 where the solids are removed from the liquid. Because the size and density of these particles were increased by their passage through combustors 45 and 55,

the separations which occur in this and the subsequent liquid-solids separation devices will be easier to effect and more efficient. The solid particles removed from separator 79, from which a portion of the water-soluble alkali metal constituents have been extracted, are discharged through line 80 into stage 81 of the apparatus. The liquid separated from the solids in separation device 79, richer in alkali metal constituents than the liquid in stage 81 but leaner in such constituents than the liquid in slurry tank 65, is withdrawn from the separation device through line 66. This solution is then passed to slurry tank 65 where it serves as the alkali metal-containing solution in which the particles from combustor 55 are slurried.

Stage 81 and the other intermediate stages of the recovery train are generally similar to stage 73. In each of these stages, solids separated from a relatively concentrated liquid stream in the liquid-solids separator associated with that stage are discharged into a less concentrated solution and the concentrated solution from the separator is passed downstream for contact with solids having a higher content of water-soluble alkali metal constituents. Slurry from each stage is pumped to the liquid-solids separator in the adjacent upstream stage for separation into liquid and solid components. In the initial stage 82 of the train, incoming slurry from the second stage flows through line 83 to liquid-solids separator 84, from which the solids are discharged through line 85 into substantially pure water introduced into the stage through line 86.

The slurry formed in initial stage 82 by the mixing of substantially pure water with solids from which most of the water-soluble alkali metal constituents have been extracted results in a slurry of solid particles in a very dilute alkali metal solution. The slurry is withdrawn through line 87 by means of pump 88 and passed through line 89 to liquid-solids separation device 90.

The solids withdrawn from the separation device through line 91 will normally comprise almost entirely of inorganic ash constituents which may include water-insoluble alkali metal constituents. The solids may be further treated in such a fashion as to recover the water-insoluble alkali metal constituents or they may be disposed of by landfill, used for construction purposes or employed in other applications. The dilute alkali metal solution recovered from separator 90 is passed through line 92 to the second stage of the recovery train.

In the embodiment of the invention shown in Figure 1 and described above, char particles containing alkali metal residues are partially burned in fluidized bed combustor 45 at an initial combustion temperature between about 430°C and about 690°C and the particles thereby produced are then burned in a second fluidized bed combustor at a temperature between about 705°C and about 960°C. Both combustion steps are carried out in the absence of an added calcium-containing compound or any other added alkaline earth metal compound except such compounds that may be naturally present in the particles themselves. It will be understood that the process of the invention is not limited to this particular method of burning the char particles to increase their size and density. For example, the char particles leaving gasifier 32 may be burned at a single temperature in one fluidized bed combustion zone. Furthermore, the combustion which occurs in the fluidized bed combustion zone or zones may be carried out in the presence of an added calcium or magnesium-containing compound in order to convert water-insoluble alkali metal residues in the particles into water-soluble alkali metal residues which can be subsequently recovered in the disclosed multistage countercurrent water extraction system. If the combustion is carried out in the presence of an added calcium-containing compound, calcium oxide or calcium hydroxide is ordinarily preferred.

It will also be understood that the process of the invention is not limited to the treatment of the combusted particles in a multistage countercurrent water extraction system in order to recover alkali metal constituents. In addition to water extraction systems designed differently than the one shown in Figure 1, the process of the invention can also be used in conjunction with alkali metal recovery systems in which the combusted particles containing alkali metal residues are first treated with a calcium or magnesium-containing compound in the presence of liquid water at a temperature between about 121°C and 371°C in order to convert water-insoluble alkali metal residues into water-soluble alkali metal residues, and then subjected to water leaching. Such an alkali metal recovery system is described in detail in U.K. Patent Application GB2021630A.

The nature and objects of the invention are further illustrated by the results of laboratory tests. The first series of tests illustrates that the fluidized bed combustion of char produces particles of increased size. The second series of tests illustrates that the burning of char particles will increase the density of the particles. The third series of tests illustrates that combustion of char particles containing alkali metal residues at certain temperatures may result in the loss of alkali metal constituents from the char.

In the first series of tests, Illinois No. 6 coal, a high rank coal, impregnated with potassium carbonate or potassium hydroxide was gasified with steam in a fluidized bed reactor. Between about 50 and 100 grams of the resultant char particles ranging in size from 20 to 50 mesh were burned at atmospheric pressure in a bench scale fluidized bed combustion unit at temperatures between about 455°C and 960°C. The fluidizing gas was a mixture of nitrogen and air containing between 2 and 5 volume percent oxygen, and was passed upwardly through the char particles at a superficial velocity of between .152 and

.457 meters/second. After the particles were well burned (they contained no black color), the composition of the fluidizing gas was changed so that it contained between 15 and 20 volume percent oxygen at the same total flow rate, and the particles were further burned at a higher temperature. The size distribution of the resultant combusted particles was then measured. This size distribution is compared with the measured size distribution of the particles originally fed to the bench scale fluidized bed combustion unit in Figure 2. As can be seen from the figure, many of the particles in the size range between 10 and 100 microns, apparently agglomerated to form particles of increased size.

The second series of tests was conducted in the same general manner as discussed in relation to the first series of tests. In this series of tests, however, the bulk density of both the char fed to the fluidized bed combustion unit and the particles exiting the unit was measured. The results of these tests are set forth below in Table I.

TABLE I

EFFECT OF CHAR COMBUSTION ON BULK DENSITY

| Run | Density of Char Before Combustion (g/cc) | Density of Char After Combustion (g/cc) |
|---|---|---|
| 1 | 0.24 | 0.53 |
| 2 | 0.24 | 0.59 |
| 3 | 0.47 | 0.78 |
| 4 | 0.60 | 0.86 |
| 5 | 0.60 | 0.85 |

It can be seen from Table I that combustion of the char results in an increase in density of between 0.3 and 0.4 grams/cc.

The third series of tests was carried out in the same bench scale combustion unit as was used in the first

two series of tests. In this series of tests, the char produced as described in the first two series of tests was analyzed for sulfur content and potassium content prior to burning in the bench scale combustion unit. The combustion was carried out at an initial temperature ranging between 677°C and 816°C. After the initial combustion, the amount of oxygen fed to the combustion unit was increased and the particles were further combusted at a higher temperature. After the final combustion was completed, the resultant particles were analyzed for sulfur and potassium content. The results of these tests are set forth below in Table II.

TABLE II

SULFUR AND POTASSIUM RETENTION DURING CHAR COMBUSTION

| Run | Initial Combustion Temperature (°C) | Final Combustion Temperature (°C) | Weight % Sulfur Retained | Weight % Potassium Retained |
|---|---|---|---|---|
| 1 | 677 | 843 | 100 | 99 |
| 2 | 677 | 843 | 100 | 91 |
| 3 | 677 | 871 | 90 | 88 |
| 4 | 677 | 966 | 96 | 99 |
| 5 | 688 | 843 | 100 | 95 |
| 6 | 787 | 816 | 100 | 63 |
| 7 | 816 | 816 | 100 | 69 |

The data for Run 7 in Table II indicate that about 31% of the potassium in the char fed to the combustion unit is lost during combustion at a constant temperature of 816°C. This run indicates the importance of the combustion temperature in relation to the amount of potassium that can be leached and recovered from the combusted char. Runs 1 through 5 in Table II indicate that a precombustion at a significantly lower temperature than that of the final combustion will result in the majority of the potassium being retained in the combusted char. By comparing runs 3 and 4 with run 7, it is seen

that the final combustion temperature can be substantially increased without losing large amounts of potassium if a low temperature initial or precombustion step is utilized. Run 6 indicates that an initial combustion temperature of 788°C in the precombustion step is not sufficiently low to result in a substantial retention of potassium in the char. Based upon the data in Table II, it would appear that maximum potassium recovery can be obtained by first combusting the char at a temperature below about 690°C and completing the combustion at a selected higher temperature. The data in Table II also indicate that sulfur is retained during combustion. This phenomena could obviate the need for subtantial investments in equipment for cleaning up the flue gas generated from commercial combustion units. This in turn could result in a substantial cost savings for the process.

It will be apparent from the foregoing that the invention provides a process which facilitates the recovery of maximum amounts of alkali metal constituents from char particles produced during catalytic gasification and similar high temperature catalytic conversion processes by improving the efficiency of the liquid-solids separations carried out during the leaching of the alkali metal constituents from the char particles. As a result, the amount and size of equipment necessary to carry out these separations are reduced thereby lowering the overall cost of the conversion process.

CLAIMS:

1. A process for the conversion of a solid carbonaceous feed material in the presence of an alkali metal-containing catalyst into a liquid and/or gas wherein char particles containing alkali metal residues are produced, which comprises

(a) burning said char particles containing said alkali metal residues in a combustion zone to produce particles of increased size and density;

(b) leaching said particles of increased size and density with water or an aqueous solution to remove water-soluble alkali metal constituents from said particles and thereby form an aqueous solution enriched in said alkali metal constituents;

(c) separating said aqueous solution enriched in said alkali metal constituents from said particles of increased size and density; and

(d) using said alkali metal constituents from said aqueous solution in said conversion process as at least a portion of the alkali metal constituents comprising said alkali metal-containing catalyst.

2. A process according to claim 1 in which said alkali metal-containing catalyst comprises a potassium-containing catalyst.

3. A process according to either of claims 1 and 2 in which said carbonaceous feed material comprises coal.

4. A process according to any one of the preceding claims in which said combustion zone comprises a fluidized bed reactor.

5. A process according to any one of the preceding claims in which said char particles are burned in said ~~comsution~~ combustion zone at a combustion temperature below 843°C.

6. A process according to any one of claims 1 to 4 in which said char particles are burned in said combustion zone at a combustion temperature that increases during said burning from an initial combustion temperature above 430°C to a final combustion temperature below 960°C.

7. A process according to claim 6 in which said initial combustion temperature is between 430°C and 690°C and said final combustion temperature is between 705°C and 960°C.

8. A process according to any one of the preceding claims in which the burning of said char particles is carried out in the presence of an added calcium or magnesium-containing compound.

9. A process according to claim 8 in which said calcium-containing compound comprises calcium oxide.

10. A process according to any one of claims 1 to 7 in which before leaching said particles of increased size and density with water, said particles are treated with a calcium or magnesium-containing compound in the presence of water at a temperature of between 121°C and 371°C to convert water-insoluble alkali metal constituents in said particles into water-soluble alkali metal constituents and a portion of the water-soluble alkali metal constituents thus produced is used in said conversion process as at least a portion of the alkali metal constituents comprising said alkali metal-containing catalyst.

11. A process according to claim 10 characterized in which said calcium-containing compound comprises calcium hydroxide.

12. A process according to any one of the preceding claims in which said conversion process comprises gasification.

13. A process according to any one of claims 1 to 11 in which said conversion process comprises liquefaction.

14. A process for the conversion of a solid carbonaceous feed material in the presence of an alkali metal-containing catalyst into a liquid and/or gas according to claim 1 substantially as hereinbefore described with particular reference to the drawings.

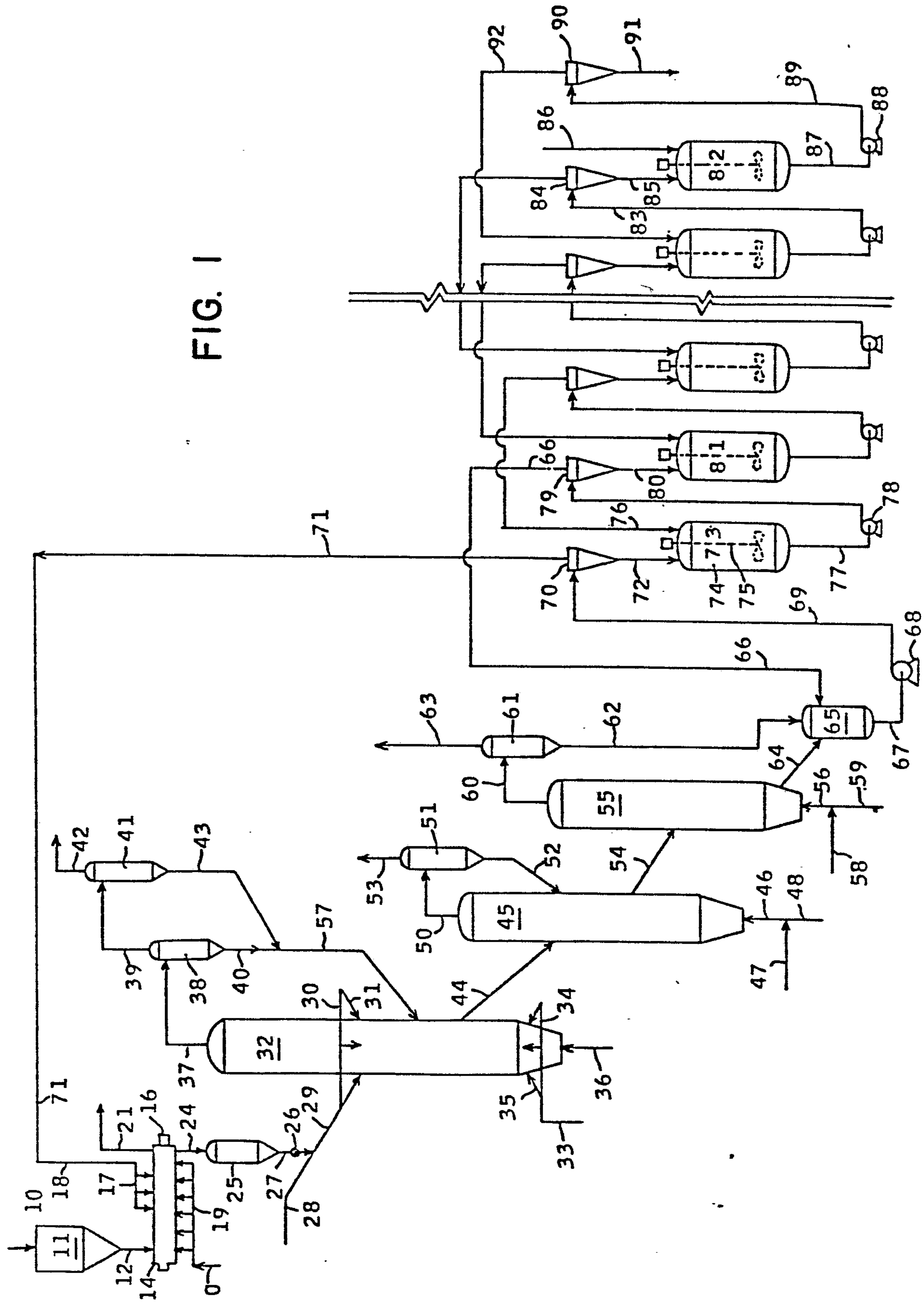

FIG. I

FIG. 2

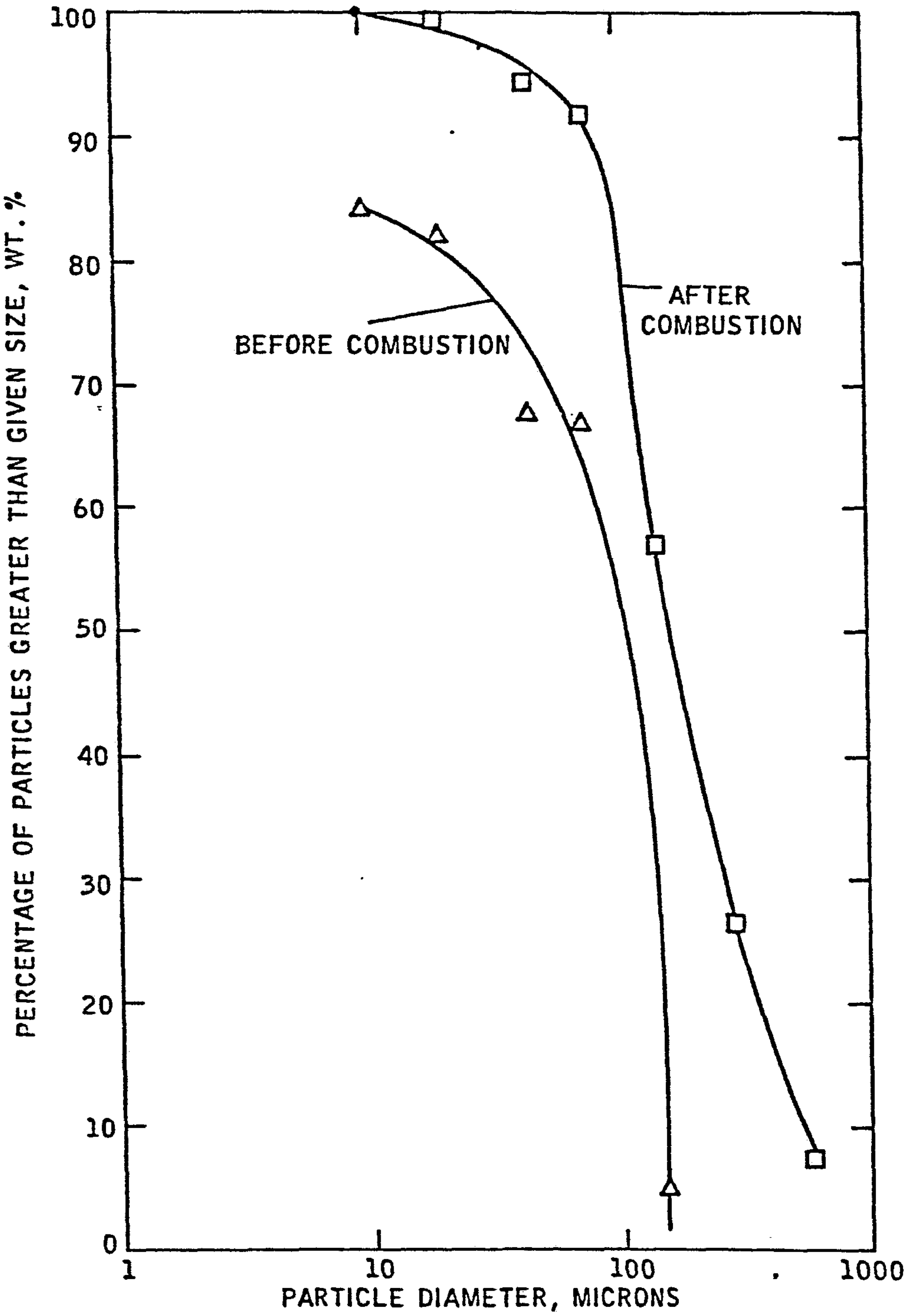
100
90
80
70
60
50
40
30
20
10
0
PERCENTAGE OF PARTICLES GREATER THAN GIVEN SIZE, WT. %
AFTER COMBUSTION
BEFORE COMBUSTION
1
10
100
1000
PARTICLE DIAMETER, MICRONS

0046829

European Patent Office

# EUROPEAN SEARCH REPORT

Application number
EP 80 30 4451

## DOCUMENTS CONSIDERED TO BE RELEVANT

| Category | Citation of document with indication, where appropriate, of relevant passages | Relevant to claim |
|---|---|---|
| | US - A - 3 998 607 (WESSELHOFT)<br>* column 3, line 40 to column 10, line 28 *<br>--- | 1-3, 12,14 |
| | FR - A - 2 378 085 (EXXON)<br>* pages 18,19; claims *<br>--- | 1-3,6-9,12-14 |
| | US - A - 3 615 299 (FISCHER)<br>* column 3, lines 75,76; column 4, lines 1-72 *<br>--- | 1-3, 12,14 |
| D | GB - A - 2 021 630 (EXXON)<br>* pages 8,9; claims *<br>--- | 1-3, 10,11-14 |
| A | US - A - 4 193 772 (SHARP) | |
| A | US - A - 4 157 246 (EAKMAN) | |
| A | US - A - 4 094 650 (KOH) | |
| A | US - A - 1 926 744 (JAMES) | |
| A | US - A - 2 420 852 (ARCHIBALD) | |
| | --------- | |

CLASSIFICATION OF THE APPLICATION (Int Cl.3)

C 10 J 3/54
C 10 G 1/08

TECHNICAL FIELDS SEARCHED (Int. Cl.3)

C 10 J 3/54
C 10 J 3/00
C 10 G 1/08

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| The Hague | 03.12.1981 | WENDLING |

EPO Form 1503.1 06.78